# EUROPEAN PATENT SPECIFICATION

(11) **EP 3 367 010 B1**
(45) Date of publication and mention of the grant of the patent: **01.06.2022**
(21) Application number: 15906639.8
(22) Date of filing: 19.10.2015
(51) Int. Cl.: F25B 1/00, F25B 13/00, F25B 25/00, F25B 49/02

(54) **HEAT SOURCE SYSTEM**
WÄRMEQUELLENSYSTEM
SYSTÈME DE SOURCE DE CHALEUR

(43) Date of publication of application: 29.08.2018
(73) Proprietor: Mitsubishi Electric Corporation, Chiyoda-ku Tokyo 100-8310 (JP)
(72) Inventor: HIKONE, Takahito, Tokyo 100-8310 (JP); OKOSHI, Yasushi, Tokyo 100-8310 (JP); ITO, Takuya, Tokyo 100-8310 (JP)
(74) Representative: Mewburn Ellis LLP
(86) International application number: PCT/JP2015/079469
(87) International publication number: WO 2017/068631

(56) References cited:
- EP-A1- 2 781 854
- JP-A- H0 791 710
- JP-A- H0 791 710
- JP-A- 2002 535 591
- JP-A- 2009 243 828
- JP-A- 2009 243 828
- JP-A- 2012 159 255
- JP-A- 2013 079 749
- US-A- 6 026 650
- US-A1- 2004 000 155
- US-A1- 2004 000 155
- None

## Description

### Technical Field

The present invention relates to a heat source system configured to supply heat medium to a load after cooling or heating the heat medium.

### Background Art

As a refrigeration cycle apparatus configured to cool or heat water to produce cold water or hot water, there has been known, for example, an air-cooled heat pump chiller. Examples of heat source systems employing the air-cooled heat pump chiller include two types of the heat source systems, namely, a duplex pump system and a simplex pump system.

In the duplex pump system, pumps are provided on a load side and a heat source device side, and header pipes provided before and after the heat source device are connected to each other by a free bypass pipe. In the simplex pump system, meanwhile, a pump is provided only on a heat source device side, and header pipes provided before and after the heat source device are connected to each other by a bypass pipe including a bypass valve. The simplex pump system is configured to control a differential pressure between locations before and after the bypass valve by the bypass valve.

In the related-art heat source system, the heat source device-side water flow rate of the heat source device is controlled by a system control device that is provided outside the heat source device and configured to control the entire heat source system in an integrated manner. In other words, in a case of employing the control through instrumentation at a system installation location as described above, the pump configured to pump water to the heat source device cannot be controlled on the heat source device side. Consequently, in the related-art heat source system, when, during a cooling operation, the water flow rate is suddenly reduced due to a sudden drop in load or other factors, and the water temperature thus suddenly drops, with the result that the evaporating temperature of the heat source device drops to a predetermined threshold, it is required to stop the heat source device to prevent water in the heat source device from being frozen.

Further, there is also a heat source system configured to supply water from a plurality of heat source devices to an air-conditioning apparatus (for example, see Patent Literature 1). In Patent Literature 1, there is a disclosure about a technology of changing a load sharing ratio between the heat source devices by checking, with a preset sharing pattern, the total of measurement values that are each obtained by a flow meter provided on the outlet side of a corresponding heat source device.

### Citation List

### Patent Literature

Patent Literature 1: Japanese Unexamined Patent Application Publication No. 2006-266644
Patent Literature 2: US 2004/000155 A1 discloses sequencing of variable primary flow chiller system
Patent Literature 3: JP 2009 243828 A discloses cooling device and cooling device monitoring system

### Summary of Invention

### Technical Problem

In the related-art control by using the threshold, however, when the water flow rate is suddenly reduced and the water temperature suddenly drops, the operation of the heat source device cannot be continued, and a certain time is required for the heat source device to restart. Further, the heat source system of Patent Literature 1 controls the operation of pumps provided downstream of the heat source devices depending on the load on the heat source devices. In short, in Patent Literature 1, there is no disclosure about a technology of preventing water from being frozen.

The present invention has been made to solve the problem as described above, and has an object to provide a heat source system configured to prevent, even when the flow rate of heat medium passing through a heat source device is suddenly reduced and a temperature of the heat medium suddenly drops, the heat medium from being frozen, thereby stably continuing the operation of the heat source device.

### Solution to Problem

A heat source system according to the present invention is as set forth in claim 1.

### Advantageous Effects of Invention

According to one embodiment of the present invention, when the evaporating temperature of the load-side heat exchanger drops to the flow rate threshold, the controller increases the frequency of the flow control pump to prevent the heat medium flowing through the load-side heat exchanger from being frozen. As a result, the operation of the heat source device may be stably continued even when the flow rate of the heat medium passing through the heat source device is suddenly reduced and the temperature of the heat medium suddenly drops.

### Brief Description of Drawings

[Fig. 1] Fig. 1 is a schematic diagram for illustrating the schematic configuration of a heat source system according to Embodiment 1 of the present invention.
[Fig. 2] Fig. 2 is a schematic diagram for illustrating a part of a heat source device side of the heat source system of Fig. 1.
[Fig. 3] Fig. 3 is a schematic diagram for illustrating a refrigerant circuit and a heat medium circuit in a heat source device of Fig. 2.
[Fig. 4] Fig. 4 is a flow chart for illustrating the operation of the heat source system of Fig. 1.
[Fig. 5] Fig. 5 is a schematic diagram for illustrating the schematic configuration of a heat source system according to Embodiment 2 of the present invention.
[Fig. 6] Fig. 6 is a schematic diagram for illustrating a part of a heat source device side of the heat source system of Fig. 5.
[Fig. 7] Fig. 7 is a schematic diagram for illustrating a refrigerant circuit and a heat medium circuit in a heat source device of Fig. 6.
[Fig. 8] Fig. 8 is a flow chart for illustrating the operation of the heat source system of Fig. 5.
[Fig. 9] Fig. 9 is a schematic diagram for illustrating a part of a heat source device side of a related-art heat source system that employs a duplex pump system.
[Fig. 10] Fig. 10 is a schematic diagram for illustrating a part of a heat source device side of a related-art heat source system that employs a simplex pump system.

### Description of Embodiments

### Embodiment 1

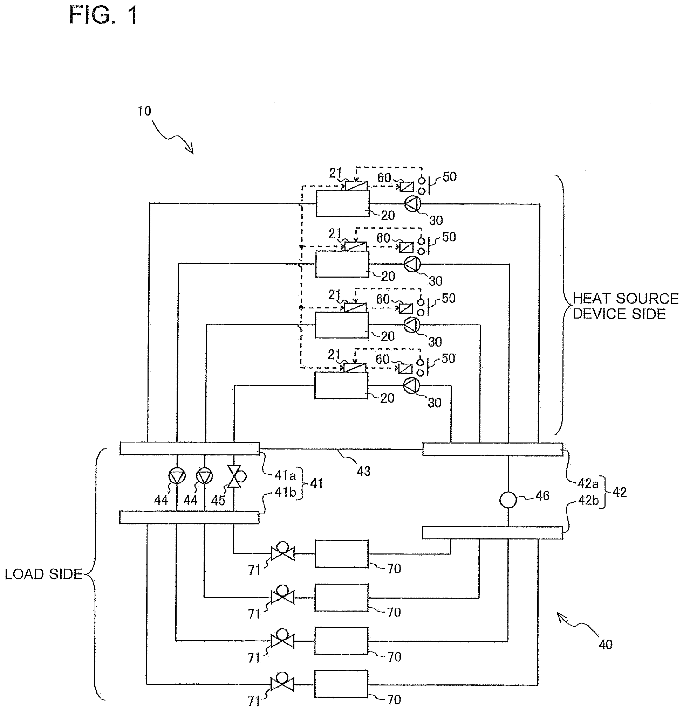

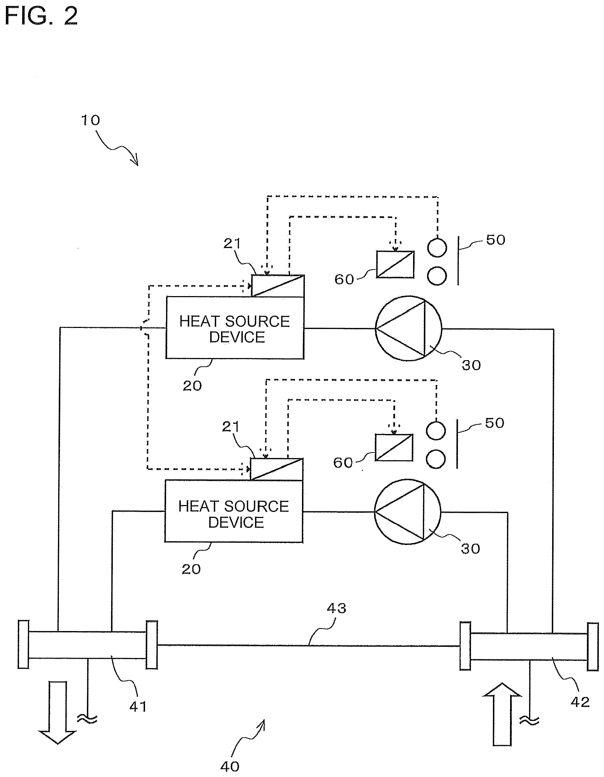

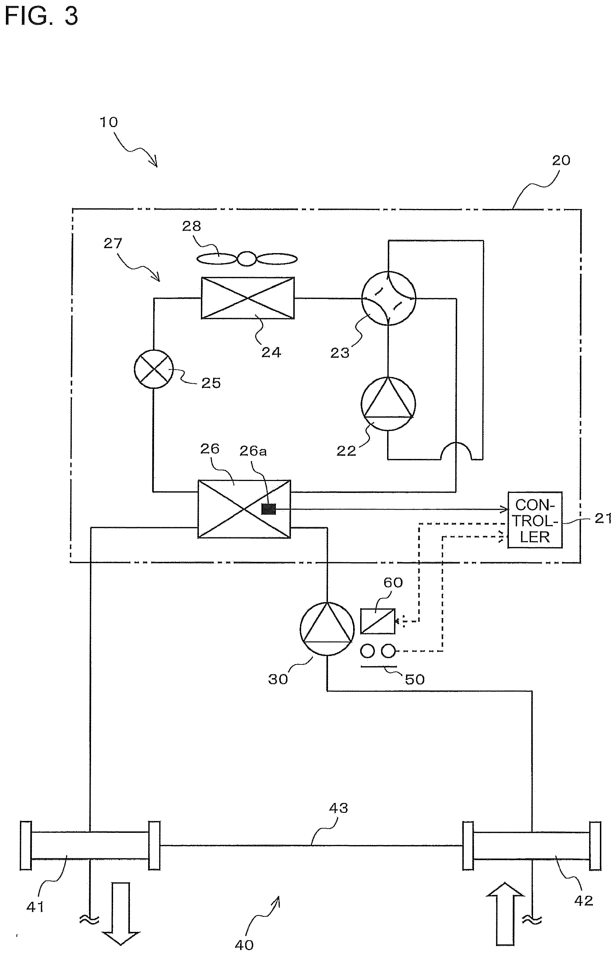

Fig. 1 is a schematic diagram for illustrating the schematic configuration of a heat source system according to Embodiment 1 of the present invention. Fig. 2 is a schematic diagram for illustrating a part of a heat source device side of the heat source system of Fig. 1. Fig. 3 is a schematic diagram for illustrating a refrigerant circuit and a heat medium circuit in a heat source device of Fig. 2. The configuration of the heat source system according to Embodiment 1 is described with reference to Fig. 1 to Fig. 3.

A heat source system 10 employs a duplex pump system, and includes a plurality of heat source devices 20, and a heat medium circuit 40 including a plurality of flow control pumps 30 that are each connected upstream of the corresponding heat source device 20. Each flow control pump 30 is coupled in series to the corresponding heat source device 20. Each heat source device 20 is a turbo refrigerating machine, for example, and includes a controller 21 configured to control the frequency of the flow control pump 30, which is connected upstream of the heat source device 20. The plurality of controllers 21 are each configured to control the operation of the corresponding heat source device 20 and the operation of the corresponding flow control pump 30 in cooperation with the other controllers 21.

Further, the heat source system 10 includes a plurality of interlock circuits 50, and a plurality of pump inverters 60. Each interlock circuit 50 is provided for the corresponding controller 21 and the corresponding flow control pump 30. Each pump inverter 60 is provided for the corresponding controller 21 and the corresponding flow control pump 30. The interlock circuit 50 outputs, to the corresponding controller 21, an interlock signal indicating that the corresponding flow control pump 30 has been driven. The pump inverter 60 subjects the corresponding flow control pump 30 to inverter control.

The heat medium circuit 40 includes a supply water-side header pipe 41 connected downstream of each heat source device 20, and a return water-side header pipe 42 connected upstream of each flow control pump 30. Further, the heat medium circuit 40 includes, between the supply water-side header pipe 41 and the return water-side header pipe 42, a plurality of load devices 70, which are air-conditioning apparatus, for example, and a plurality of load expansion valves 71 that are each connected upstream of the corresponding load device 70. The elements of the heat medium circuit 40 are connected to each other by heat medium pipes.

The supply water-side header pipe 41 includes a supply water primary header 41a provided on the upstream side and a supply water secondary header 41b provided on the downstream side. The return water-side header pipe 42 includes a return water primary header 42a provided on the downstream side and a return water secondary header 42b provided on the upstream side. The supply water primary header 41a and the return water primary header 42a are connected to each other by a free bypass pipe 43. The free bypass pipe 43 bypasses the plurality of load devices 70. A flow passage side from the return water primary header 42a to the supply water primary header 41a via each flow control pump 30 and each heat source device 20, as illustrated in Fig. 1, is herein referred to as "heat source device side." Further, a flow passage side from the supply water primary header 41a to the return water primary header 42a via each load expansion valve 71 and each load device 70 is referred to as "load side."

A plurality of supply water-side pumps 44 and a supply water-side expansion valve 45 are provided between the supply water primary header 41a and the supply water secondary header 41b. To the heat medium pipe connecting the return water primary header 42a and the return water secondary header 42b to each other, a flow meter 46 configured to measure the flow rate of the heat medium returning to the heat source device side is connected. In Fig. 2 and Fig. 3, configurations in the vicinity of the supply water-side header pipe 41 and the return water-side header pipe 42 are illustrated in a simplified manner.

The heat source devices 20 have the same internal configuration, and hence one heat source device 20 and configurations in the vicinity of the one heat source device 20 are described below with reference to Fig. 3. As illustrated in Fig. 3, the heat source device 20 includes a refrigerant circuit 27 including a compressor 22, a four-way valve 23, a heat source-side heat exchanger 24, an expansion valve 25, and a load-side heat exchanger 26 that are connected to each other by refrigerant pipes. The refrigerant circuit 27 is configured such that refrigerant circulates in the refrigerant pipes. Further, the heat source device 20 includes a fan 28 that is provided beside the heat source-side heat exchanger 24, and is configured to facilitate heat exchange that is performed by the heat source-side heat exchanger 24. The load-side heat exchanger 26 is provided with a temperature sensor 26a configured to measure the evaporating temperature of the load-side heat exchanger 26, and transmit information on the measured evaporating temperature to the controller 21.

The compressor 22 includes a compressor motor (not shown) that is driven by an inverter circuit, for example, and compresses the refrigerant. The four-way valve 23 switches the flow passage of the refrigerant, and includes four pipes for each forming a flow passage suitable for the operational state of the heat source system 10. That is, the compressor 22, the heat source-side heat exchanger 24, and the load-side heat exchanger 26 are connected to any one of the four pipes of the four-way valve 23 depending on the operational state. Fig. 3 is an illustration of a state in a cooling operation.

The heat source-side heat exchanger 24 is a fin-and-tube heat exchanger, for example, and exchanges heat between air and the refrigerant. The fan 28 includes a fan motor (not shown) that is driven by an inverter circuit, for example, and rotates with the fan motor serving as a power source to send air to the heat source-side heat exchanger 24.

The expansion valve 25 is an electronic expansion valve, for example, and controls the flow rate of the refrigerant. In the cooling operation, the expansion valve 25 reduces the pressure of high-pressure refrigerant that flows into the expansion valve 25 from the heat source-side heat exchanger 24. The load-side heat exchanger 26 exchanges heat between the heat medium flowing through each load device 70, that is, the heat medium circulating through the heat medium circuit 40, and the refrigerant flowing through the refrigerant circuit 27. The load-side heat exchanger 26 acts as an evaporator in the cooling operation and a defrosting operation, and acts as a condenser in a heating operation.

In the refrigerant circuit 27, one of the four pipes included in the four-way valve 23 is connected to the compressor 22 and another one of the four pipes is connected to the heat source-side heat exchanger 24. In short, the compressor 22 is connected to the heat source-side heat exchanger 24 via the four-way valve 23. In the cooling operation, the discharge side of the compressor 22 is connected to the heat source-side heat exchanger 24 via the four-way valve 23.

Further, in the refrigerant circuit 27, the heat source-side heat exchanger 24 and the expansion valve 25 are connected to each other, and the expansion valve 25 and the load-side heat exchanger 26 are connected to each other. The load-side heat exchanger 26 is connected to one of the remaining two pipes included in the four-way valve 23, and the remaining one pipe included in the four-way valve 23 is connected to the compressor 22. As illustrated in Fig. 3, the supply water-side header pipe 41 is connected downstream of the load-side heat exchanger 26, and the return water-side header pipe 42 is connected upstream of the load-side heat exchanger 26.

The heat medium circuit 40 circulates the heat medium through the load devices 70 provided downstream of the load-side heat exchanger 26. The flow control pump 30 pumps the heat medium circulating through the heat medium circuit 40 to the load-side heat exchanger 26. The free bypass pipe 43 bypasses, when the flow rate of the heat medium flowing through each load-side heat exchanger 26 is larger than the flow rate of the heat medium flowing through each load device 70, the heat medium from the supply water primary header 41a located on the upstream side to the return water secondary header 42b by an amount corresponding to a difference between the flow rates. As the heat medium used herein, water or brine can be used.

That is, in the heat medium circuit 40, the flow control pump 30 and the pump inverter 60 configured to control the frequency of the flow control pump 30 are provided downstream of the load-side heat exchanger 26. The heat medium pipe extending from the load-side heat exchanger 26 is connected to the supply water-side header pipe 41. The supply water-side header pipe 41 is connected to the return water-side header pipe 42 via the free bypass pipe 43, and the heat medium that has passed through the free bypass pipe 43 returns to the flow control pump 30 through the return water-side header pipe 42. The heat medium pipe is also connected on the load side of the supply water-side header pipe 41, and the heat medium that has exchanged heat in the load devices 70 returns to the return water-side header pipe 42.

The controller 21 includes a storage unit (not shown) configured to store control programs, for example. This storage unit can be constructed by a RAM and a ROM, a hard disk drive (HDD), a flash memory, or other devices.

The controller 21 is configured to drive the compressor 22 to drive the heat source device 20 after receiving the interlock signal from the interlock circuit 50. That is, the controller 21 has an interlock function of driving the compressor 22 after reception of the interlock signal indicating that the flow control pump 30 has been driven.

The controller 21 is connected to the pump inverter 60, and sends a frequency command signal to the pump inverter 60, thereby controlling the frequency of the flow control pump 30. Further, the controller 21 controls the frequency of the flow control pump 30 on the basis of information on the evaporating temperature that is sent from the temperature sensor 26a, thereby executing freezing prevention control for the heat medium flowing through the load-side heat exchanger 26.

More specifically, when the evaporating temperature of the load-side heat exchanger 26 drops to a flow rate threshold A, the controller 21 transmits a command signal for increasing the frequency of the flow control pump 30 to the pump inverter 60. Then, the pump inverter 60 increases the frequency of the flow control pump 30 in accordance with the control signal sent from the controller 21.

The flow rate threshold A is set in advance in consideration of a temperature at which the heat medium is frozen and other factors. Specifically, the flow rate threshold A is set to a temperature at which the heat medium flowing through the load-side heat exchanger 26 may be frozen unless the controller 21 executes the freezing prevention control. A plurality of flow rate thresholds A may be set depending on the frequency of the flow control pump 30, that is, the flow rate of the heat medium that is pumped from the flow control pump 30. In this case, the flow rate thresholds A are set in association with the frequency of the flow control pump 30 and stored in the storage unit or other devices in advance. Further, the flow rate threshold A may be set for each heat source device 20 in consideration of the capacity of each heat source device 20, for example.

An amount by which the controller 21 increases the frequency of the flow control pump 30 when the evaporating temperature of the load-side heat exchanger 26 drops to the flow rate threshold A is herein referred to as "frequency increase amount." The frequency increase amount is determined depending on the frequency of the flow control pump 30 at a time when the evaporating temperature of the load-side heat exchanger 26 drops to the flow rate threshold A, the capacity of the heat source device 20, and other factors. The configuration can be employed, for example, in which an increase amount table in which the frequency of the flow control pump 30 and the frequency increase amount are associated with each other is stored in the storage unit or other devices in advance, and the controller 21 refers to the increase amount table, thereby determining the frequency increase amount.

Further, the controller 21 stops the drive of the compressor 22 when the evaporating temperature of the load-side heat exchanger 26 drops to a stop threshold B. The stop threshold B is set to a temperature at which the heat medium flowing through the load-side heat exchanger 26 may be frozen even when the controller 21 increases the flow rate of the heat medium that is pumped from the flow control pump 30. An increase in flow rate of the heat medium that is pumped from the flow control pump 30 can prevent the heat medium flowing through the load-side heat exchanger 26 from being frozen, and hence the stop threshold B is set to a temperature lower than the flow rate threshold A.

The stop threshold B is set in association with the flow rate threshold A and the frequency increase amount. The configuration can be employed, for example, in which a threshold table in which the flow rate threshold A, the frequency increase amount, and the stop threshold B are associated with one another is stored in the storage unit or other devices, and the controller 21 refers to the threshold table, thereby determining the stop threshold B.

In addition, the plurality of controllers 21 are configured to execute number-of-units control or capacity control on the corresponding heat source devices 20 on the basis of a measurement value obtained by the flow meter 46. One of the plurality of controllers 21 executes integrated control in the configuration of Embodiment 1; however, a controller configured to execute the number-of-units control or the capacity control may be separately provided.

The controller 21 can be implemented by a circuit device or other types of hardware configured to achieve the functions described above, or can be implemented by software that is executed on a microcomputer, for example, a DSP or an arithmetic device, for example, a CPU. Further, in the example of Embodiment 1, the controller 21 is provided inside the heat source device 20, but the present invention is not limited to the example. The controller 21 may be provided outside the heat source device 20.

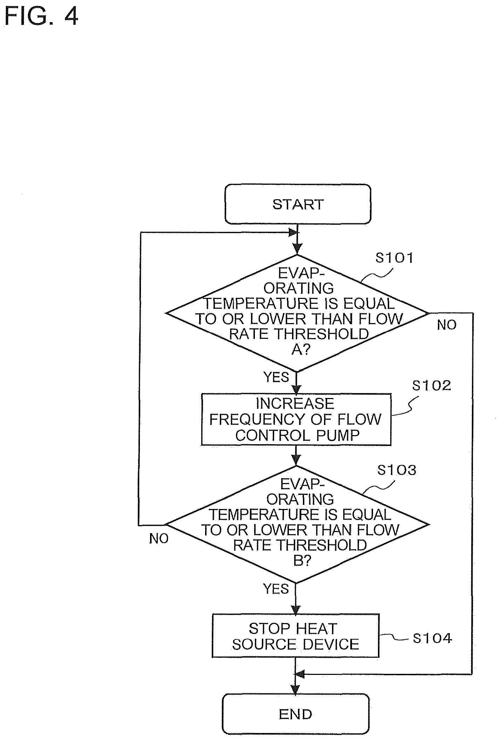

Fig. 4 is a flow chart for illustrating the operation of the heat source system 10. The freezing prevention control that is executed by the controller 21 is described with reference to Fig. 4.

When the heat source system 10 is a duplex pump system, the controller 21 determines whether or not the evaporating temperature of the load-side heat exchanger 26 is equal to or lower than the flow rate threshold A (Fig. 4: Step S101). When the evaporating temperature is higher than the flow rate threshold A (Fig. 4: Step S101, NO), the controller 21 does not execute the freezing prevention control and continues the monitoring of the evaporating temperature.

When the evaporating temperature is equal to or lower than the flow rate threshold A (Fig. 4: Step S101, YES), on the other hand, the controller 21 increases the frequency of the flow control pump 30, thereby increasing the flow rate of the heat medium flowing through the load-side heat exchanger 26 (Fig. 4: Step S102).

Next, the controller 21 determines whether or not the evaporating temperature of the load-side heat exchanger 26 is equal to or lower than the stop threshold B (Fig. 4: Step S103). When the evaporating temperature is higher than the stop threshold B (Fig. 4: Step S103, NO), the processing returns to Step S101. When the evaporating temperature is equal to or lower than the stop threshold B (Fig. 4: Step S103, YES), on the other hand, the controller 21 stops the drive of the compressor 22, thereby stopping the heat source device 20 (Fig. 4: Step S104).

As described above, in the heat source system 10 according to Embodiment 1, the controller 21 increases the frequency of the flow control pump 30 when the evaporating temperature of the load-side heat exchanger 26 drops to the flow rate threshold A, and the heat medium flowing through the load-side heat exchanger 26 can thus be prevented from being frozen. Consequently, even when the evaporating temperature of the load-side heat exchanger 26 drops to the flow rate threshold A, at which the heat source device 20 is stopped in the related art, the operation of the heat source device 20 can be continued. That is, in the heat source system 10, the operation of the heat source device 20 can be continued until the evaporating temperature of the load-side heat exchanger 26 drops to the stop threshold B, which is a temperature lower than the flow rate threshold A.

In conclusion, in the heat source system 10, even when the flow rate of the heat medium flowing through the load-side heat exchanger 26 is suddenly reduced and the temperature of the heat medium suddenly drops, the heat medium can be prevented from being frozen, and the operation of the heat source device 20 can therefore be continued stably. That is, the heat source system 10 can continue the operation of the heat source device 20 with safety even when the load suddenly drops.

### Embodiment 2

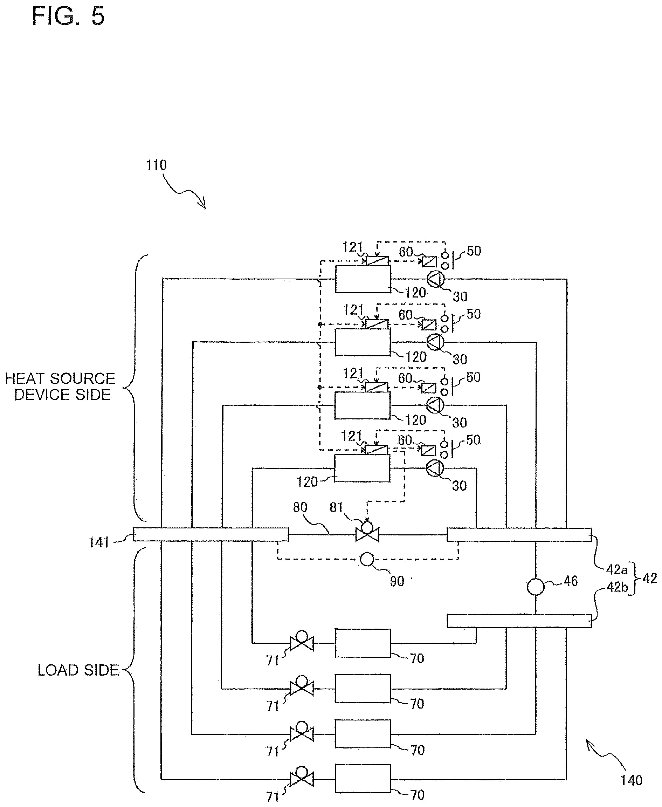

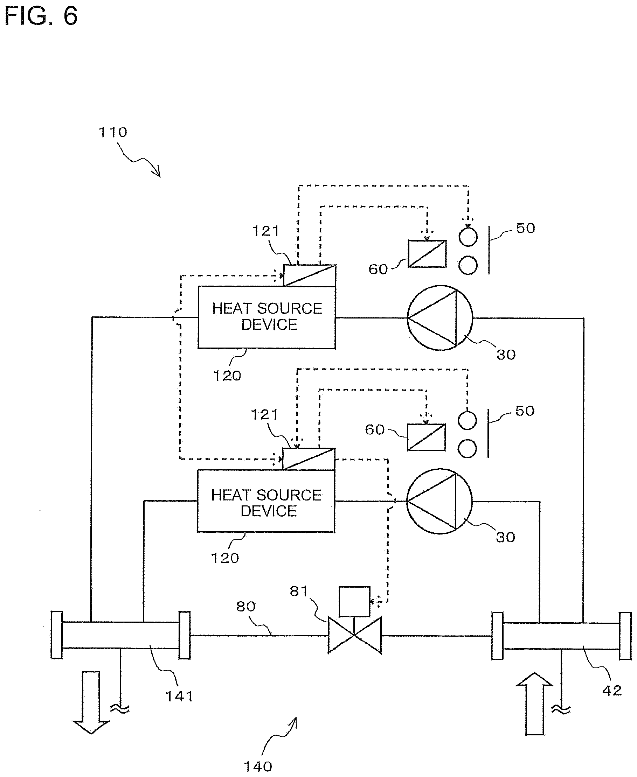

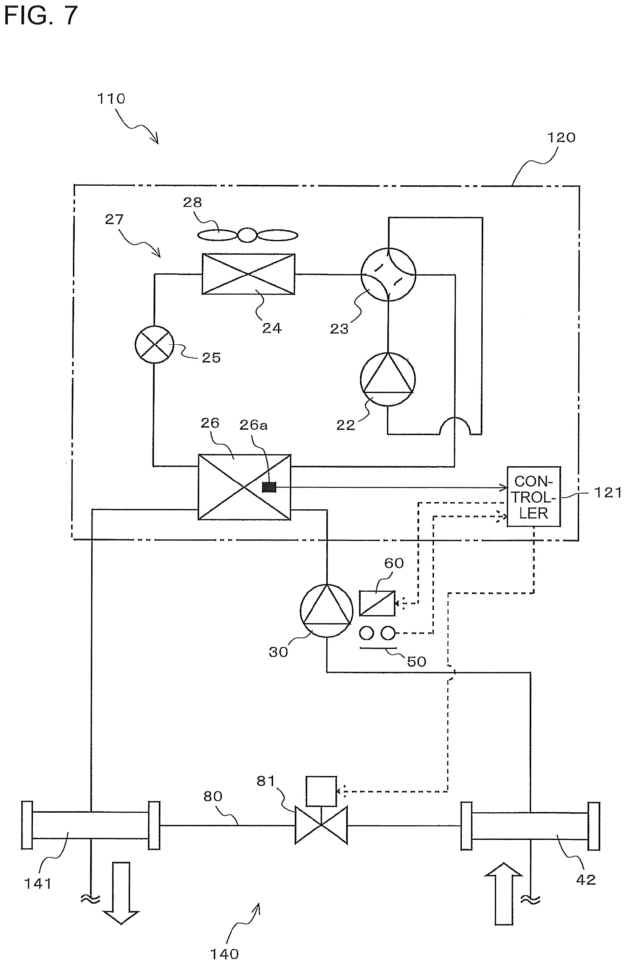

Fig. 5 is a schematic diagram for illustrating the schematic configuration of a heat source system according to Embodiment 2 of the present invention. Fig. 6 is a schematic diagram for illustrating a part of a heat source device side of the heat source system of Fig. 5. Fig. 7 is a schematic diagram for illustrating a refrigerant circuit and a heat medium circuit in a heat source device of Fig. 6. The configuration of the heat source system according to Embodiment 2 is described with reference to Fig. 5 to Fig. 7. The same components as those of the heat source system 10 of Embodiment 1 described above are denoted by the same reference signs, and description of the components is herein omitted.

A heat source system 110 according to Embodiment 2 employs a duplex pump system, and includes a plurality of heat source devices 120, and a heat medium circuit 140 including a plurality of flow control pumps 30 that are each connected upstream of the corresponding heat source device 120.

The heat medium circuit 140 includes a bypass pipe 80 configured to bypass a plurality of load devices 70, a bypass valve 81 that is provided on the bypass pipe 80, and is configured to control the flow rate of the heat medium flowing through the bypass pipe 80, and a differential pressure gauge 90 configured to measure a differential pressure between a location upstream of the bypass pipe 80 and a location downstream of the bypass pipe 80. The bypass valve 81 controls a differential pressure between the location upstream of the bypass pipe 80 and the location downstream of the bypass pipe 80.

More specifically, the heat medium circuit 140 includes a supply water-side header pipe 141 connected downstream of each heat source device 120, and a return water-side header pipe 42 having a return water primary header 42a, a return water secondary header 42b, and a flow meter 46. The bypass pipe 80 connects the supply water-side header pipe 141 and the return water primary header 42a to each other. The bypass valve 81 controls a differential pressure between the supply water-side header pipe 141 and the return water primary header 42a. Specifically, the bypass valve 81 controls the flow rate of the heat medium flowing from the supply water-side header pipe 141 to the return water primary header 42a via the bypass pipe 80. The differential pressure gauge 90 measures a differential pressure between the supply water-side header pipe 141 and the return water primary header 42a.

Each heat source device 120 includes a controller 121 configured to control the frequency of the flow control pump 30 that is connected upstream of the heat source device 120. The plurality of controllers 121 are each configured to control the operation of the corresponding heat source device 20 and the operation of the corresponding flow control pump 30 in cooperation with the other controllers 121. Further, each heat source device 120 includes, as illustrated in Fig. 7, the refrigerant circuit 27 and other components that are the same as those in Embodiment 1.

Each controller 121 sends a frequency command signal to the pump inverter 60, thereby performing the freezing prevention control for the heat medium, and other frequency controls for the flow control pump 30. The controller 121 is connected to the bypass valve 81 and controls the flow rate of the heat medium from the supply water-side header pipe 41 to the return water-side header pipe 42 on the basis of a measurement value obtained by the differential pressure gauge 90.

Each controller 121 is configured to obtain information on the frequency of the corresponding flow control pump 30, that is, information indicating the flow rate of the heat medium that is pumped from the flow control pump 30. Further, any one of the plurality of controllers 121 is configured to obtain information on the frequencies of the corresponding flow control pumps 30 from the other controllers 121, and control the opening degree of the bypass valve 81 on the basis of the information on the frequency of each flow control pump 30 and the measurement value obtained by the differential pressure gauge 90. With this configuration, a difference between the flow rate of the heat medium flowing through each heat source device 120 and the flow rate of the heat medium flowing through each load device 70 can be controlled.

That is, the controller 121 according to Embodiment 2 is configured to increase the frequency of the flow control pump 30 and the opening degree of the bypass valve 81 when the evaporating temperature of the load-side heat exchanger 26 drops to the flow rate threshold A. The details of other configurations are the same as those in Embodiment 1 described above.

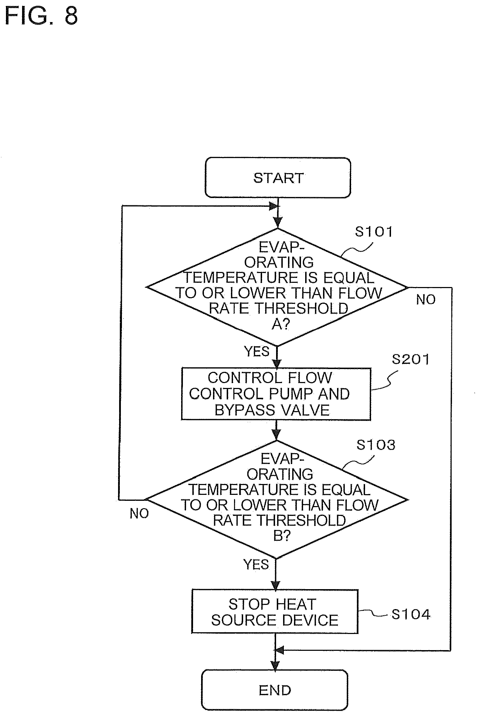

Fig. 8 is a flow chart for illustrating the operation of the heat source system 110. The freezing prevention control that is executed by the controller 121 is described with reference to Fig. 8. In Fig. 8, the operations that are the same as those in Fig. 4, which is an illustration of Embodiment 1, are denoted by the same reference signs.

When the heat source system 110 is a simplex pump system, the controller 121 determines whether or not the evaporating temperature of the load-side heat exchanger 26 is equal to or lower than the flow rate threshold A (Fig. 8: Step S101). When the evaporating temperature is higher than the flow rate threshold A (Fig. 8: Step S101, NO), the controller 21 does not execute the freezing prevention control and continues the monitoring of the evaporating temperature.

When the evaporating temperature is equal to or lower than the flow rate threshold A (Fig. 8: Step S101, YES), on the other hand, the controller 21 controls the flow control pump 30 and the bypass valve 81. Specifically, the controller 21 increases the frequency of the flow control pump 30, thereby increasing the flow rate of the heat medium flowing through the load-side heat exchanger 26. At the same time, the controller 21 increases the opening degree of the bypass valve 81. In this manner, a difference between the flow rate of the heat medium flowing through each heat source device 120 and the flow rate of the heat medium flowing through each load device 70 can be controlled (Fig. 8: Step S201).

Next, the controller 21 determines whether or not the evaporating temperature of the load-side heat exchanger 26 is equal to or lower than the stop threshold B (Fig. 8: Step S103). When the evaporating temperature is higher than the stop threshold B (Fig. 8: Step S103, NO), the processing returns to Step S101. When the evaporating temperature is equal to or lower than the stop threshold B (Fig. 8: Step S103, YES), on the other hand, the controller 21 stops the drive of the compressor 22, thereby stopping the heat source device 20 (Fig. 8: Step S104).

As described above, in the heat source system 110 according to Embodiment 2, the controller 121 increases the frequency of the flow control pump 30 and the opening degree of the bypass valve 81 when the evaporating temperature of the load-side heat exchanger 26 drops to the flow rate threshold A, and the heat medium flowing through the load-side heat exchanger 26 can thus be prevented from being frozen. Consequently, even when the evaporating temperature of the load-side heat exchanger 26 drops to the flow rate threshold A, at which the heat source device 20 is stopped in the related art, the operation of the heat source device 20 can be continued until the evaporating temperature of the load-side heat exchanger 26 drops to the stop threshold B, which is a temperature lower than the flow rate threshold A by a certain degree.

In conclusion, in the heat source system 110, even when the flow rate of the heat medium flowing through the load-side heat exchanger 26 is suddenly reduced and the temperature of the heat medium suddenly drops, the heat medium can be prevented from being frozen, and the operation of the heat source device 120 can therefore be continued stably. That is, the heat source system 110 can continue the operation of the heat source device 120 with safety even when the load suddenly drops.

### (Effects of Embodiments 1 and 2)

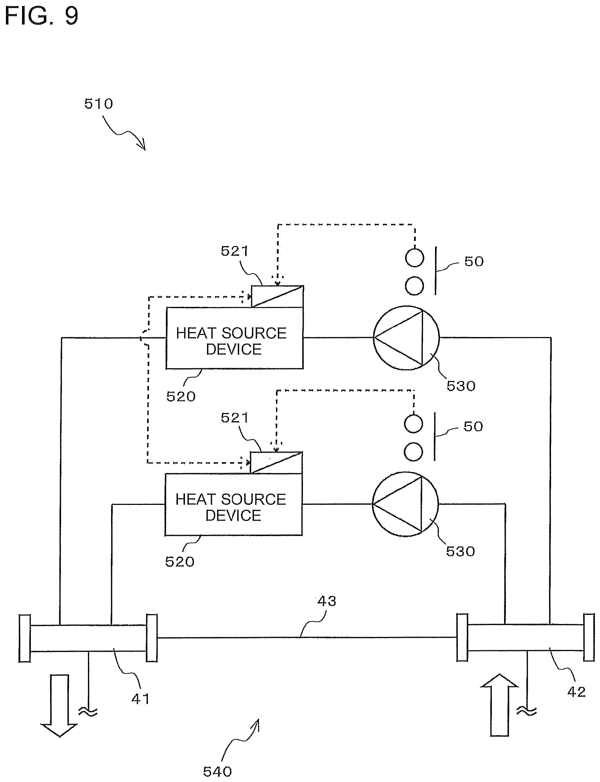

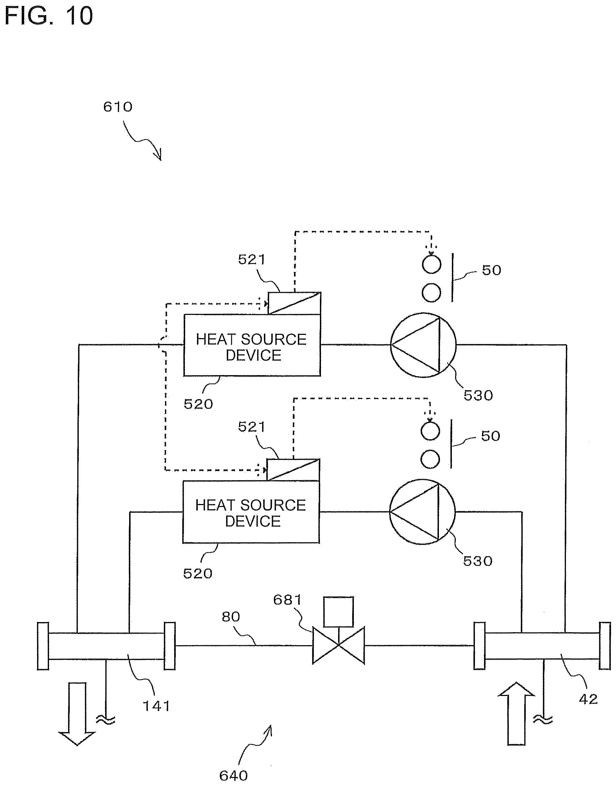

Fig. 9 is a schematic diagram for illustrating a part of a heat source device side of a related-art heat source system that employs a duplex pump system. Fig. 10 is a schematic diagram for illustrating a part of a heat source device side of a related-art heat source system that employs a simplex pump system. Effects that are provided by the heat source system 10 and the heat source system 110 are described below in detail with reference to Fig. 9 and Fig. 10.

As illustrated in Fig. 9 and Fig. 10, in heat source systems 510 and 610 having related-art configurations, a heat source device 520 does not have a configuration for controlling a heat source device-side water flow rate, and the heat source device-side water flow rate is controlled through instrumentation at a system installation location. Specifically, a controller 521 included in the heat source device 520 is configured to receive only an interlock signal that is transmitted from an interlock circuit 50, and is not configured to control the frequency of a pump 530.

Further, in the heat source system 610 that is a simplex pump system, unlike a heat medium circuit 540 of the heat source system 510 that is a duplex pump system, a heat medium circuit 640 includes a bypass valve 681 configured to control a differential pressure between a supply water-side header pipe 141 and a return water-side header pipe 42. However, the controller 521 is not configured to control the bypass valve 681.

Consequently, in the heat source systems 510 and 610, when, during a cooling operation, the water flow rate is suddenly reduced and the water temperature suddenly drops, with the result that the evaporating temperature of the heat source device 520 drops to the flow rate threshold A, it is required to stop the heat source device 520 to prevent heat medium from being frozen. Further, a certain standby time is required for the heat source device 520 to restart once the heat source device 520 is stopped, and hence the operating efficiency of the heat source device 520 drops.

In this context, in the heat source system 10 or 110 of Embodiment 1 or 2 described above, the heat medium can be prevented from being frozen even when the flow rate of the heat medium passing through the heat source device 20 or 120 is suddenly reduced and the temperature of the heat medium flowing through the load-side heat exchanger 26 suddenly drops. As a result, the operation of the heat source device 20 or 120 can be stably continued, and operational efficiency can be improved.

Each Embodiment described above is a specific preferred example of the heat source system, and the technical scope of the present invention is not limited to those Embodiments. For example, in the example of Embodiment 1, one controller 21 is provided for each heat source device 20, but the present invention is not limited to the example. The heat source system 10 may include one controller 21 configured to control each heat source device 20 in an integrated manner. The heat source system 110 according to Embodiment 2 may also include one controller 121 configured to control each heat source device 120 in an integrated manner. Further, in the example of Fig. 1 or Fig. 5, the plurality of heat source devices 20 or 120 are provided, but the present invention is not limited to the example. The number of heat source devices 20 or 120 may be one. Further, in the example of Fig. 1 or Fig. 5, the plurality of load devices 70 are provided, but the present invention is not limited to the example. The number of load devices 70 may be one. In addition, the number of heat source devices 20 or 120 is not limited to four, which is employed in the case of Fig. 1 or Fig. 5, and the heat source system 10 or 110 may include any number of heat source devices 20 or 120. In a similar manner, the heat source system 10 or 110 may be connected to any number of load devices 70.

### Reference Signs List

10, 110, 510, 610 heat source system 20, 120, 520 heat source device 21, 121 controller22 compressor 23 four-way valve 24 heat source-side heat exchanger 25 expansion valve 26 load-side heat exchanger 26a temperature sensor 27 refrigerant circuit 28 fan 30 flow control pump 40, 140, 540, 640 heat medium circuit 41, 141 supply water-side header pipe 41a supply water primary header 41b supply water secondary header 42 return water-side header pipe 42a return water primary header 42b return water secondary header 43 free bypass pipe 44 supply water-side pump 45 expansion valve 46 flow meter 50 interlock circuit 60 pump inverter 70 load device 71 load expansion valve 80 bypass pipe 81, 681 bypass valve 90 differential pressure gauge 530 pump A flow rate threshold B stop threshold

## Claims

1. A heat source system (10, 110), comprising:
a refrigerant circuit (27) formed by connecting a compressor (22), a heat source-side heat exchanger (24), an expansion valve (25), and a load-side heat exchanger (26),
the compressor (22) being configured to compress refrigerant,
the heat source-side heat exchanger (24) being configured to exchange heat between air and the refrigerant,
the expansion valve (25) being configured to control a flow rate of the refrigerant,
the load-side heat exchanger (26) being configured to exchange heat between heat medium and the refrigerant;
a heat medium circuit (40, 140) including a flow control pump (30) configured to pump the heat medium to the load-side heat exchanger (26), and configured to circulate the heat medium to a load device (70) that is provided downstream of the load-side heat exchanger (26); and
a controller (21, 121) configured to control a frequency of the flow control pump (30) and to carry out a freezing prevention control,
the controller (21, 121) including a storage unit storing an increase amount table in which the frequency of the flow control pump (30) and a frequency increase amount that is an amount by which the frequency of the flow control pump (30) is increased are associated with each other, wherein the storage unit also stores a plurality of flow rate thresholds that are set in association with the frequency of the flow control pump (30) and wherein the flow rate thresholds are set to a temperature at which the heat medium flowing through the load-side heat exchanger (26) may be frozen unless the controller executes the freezing prevention control,
when an evaporating temperature of the load-side heat exchanger (26) drops to the flow rate threshold for the current frequency of the flow control pump, the controller (21, 121) being configured to carry out the freezing prevention control and to refer to the increase amount table with the frequency of the flow control pump (30) to determine the frequency increase amount, and increase the frequency of the flow control pump (30) by the frequency increase amount that is determined.

2. The heat source system (110) of claim 1,
wherein the heat medium circuit (140) includes
a bypass pipe (80) configured to bypass the load device (70), and
a bypass valve (81) provided on the bypass pipe (80), and configured to control a flow rate of the heat medium flowing through the bypass pipe (80), and
wherein, when the evaporating temperature of the load-side heat exchanger (26) drops to the flow rate threshold, the controller (121) is configured to increase an opening degree of the bypass valve (81).

3. The heat source system (10, 110) of claim 1 or 2, wherein the controller (21, 121) is configured to stop drive of the compressor (22) when the evaporating temperature of the load-side heat exchanger (26) drops to a stop threshold that is set to a temperature lower than the flow rate threshold.

4. The heat source system (10, 110) of claim 3,
wherein the storage unit stores a threshold table in which the flow rate threshold, the frequency increase amount, and the stop threshold are associated with one another, and
wherein the controller (21, 121) is configured to refer to the threshold table to determine the stop threshold.

5. The heat source system (10, 110) of any one of claims 1 to 4, comprising:
a plurality of the refrigerant circuits (27); and
a plurality of the flow control pumps (30) of the heat medium circuit (40, 140), the plurality of the flow control pumps (30) being each provided for a corresponding one of the plurality of the refrigerant circuits (27).

6. The heat source system (10, 110) of any one of claims 1 to 5, comprising:
a plurality of the refrigerant circuits (27); and
a plurality of the controllers (21, 121) that are each provided for a corresponding-one of the plurality of the refrigerant circuits (27).

## Patentansprüche

1. Wärmequellensystem (10, 110), umfassend:
einen Kühlmittelkreislauf (27), der durch Verbinden eines Kompressors (22), eines wärmequellenseitigen Wärmetauschers (24), eines Expansionsventils (25) und eines lastseitigen Wärmetauschers (26) gebildet wird,
wobei der Kompressor (22) konfiguriert ist, um Kühlmittel zu komprimieren,
wobei der wärmequellenseitige Wärmetauscher (24) konfiguriert ist, um Wärme zwischen Luft und dem Kühlmittel auszutauschen,
wobei das Expansionsventil (25) konfiguriert ist, um eine Strömungsrate des Kühlmittels zu steuern,
wobei der lastseitige Wärmetauscher (26) konfiguriert ist, um Wärme zwischen einem Wärmemedium und dem Kühlmittel auszutauschen;
einen Wärmemediumskreislauf (40, 140), der eine Strömungssteuerpumpe (30) umfasst, die konfiguriert ist, um das Wärmemedium zum lastseitigen Wärmetauscher (26) zu pumpen, und konfiguriert ist, um das Wärmemedium zu einer Lastvorrichtung (70) zu zirkulieren, die stromab vom lastseitigen Wärmetauscher (26) bereitgestellt ist; und
eine Steuerung (21, 121), die konfiguriert ist, um eine Frequenz der Strömungssteuerpumpe (30) zu steuern und eine Gefrierpräventionssteuerung auszuführen,
wobei die Steuerung (21, 121) eine Speichereinheit umfasst, in der eine Erhöhungsausmaßtabelle gespeichert ist, in der die Frequenz der Strömungssteuerpumpe (30) und ein Frequenzerhöhungsausmaß, bei dem es sich um ein Ausmaß handelt, um das die Frequenz der Strömungssteuerpumpe (30) erhöht wird, einander zugeordnet sind, wobei in der Speichereinheit auch eine Vielzahl von Strömungsratenschwellwerten gespeichert ist, die in Zuordnung zu der Frequenz der Strömungssteuerpumpe (30) eingestellt sind, und wobei die Strömungsratenschwellwerte auf eine Temperatur eingestellt sind, bei der das Wärmemedium, das durch den lastseitigen Wärmetauscher (26) strömt, gefroren sein kann, sofern nicht die Steuerung die Gefrierpräventionssteuerung ausführt,
wobei, wenn eine Verdampfungstemperatur des lastseitigen Wärmetauschers (26) auf die Strömungsratenschwelle für die aktuelle Frequenz der Strömungssteuerpumpe fällt, die Steuerung (21, 121) konfiguriert ist, die Gefrierpräventionssteuerung auszuführen und auf die Erhöhungsausmaßtabelle mit der Frequenz der Strömungssteuerpumpe (30) zurückzugreifen, um das Frequenzerhöhungsausmaß zu bestimmen, und die Frequenz der Strömungssteuerpumpe (30) um das bestimmte Frequenzerhöhungsausmaß zu erhöhen.

2. Wärmequellensystem (110) nach Anspruch 1,
wobei der Wärmemediumskreislauf (140) umfasst:
ein Umgehungsrohr (80), das konfiguriert ist, um die Lastvorrichtung (70) zu umgehen, und
ein Umgehungsventil (81), das am Umgehungsrohr (80) bereitgestellt ist und konfiguriert ist, eine Strömungsrate des Wärmemediums zu steuern, das durch das Umgehungsrohr (80) strömt, und
wobei, wenn die Verdampfungstemperatur des lastseitigen Wärmetauschers (26) auf die Strömungsratenschwelle fällt, die Steuerung (121) konfiguriert ist, einen Öffnungsgrad des Umgehungsventils (81) zu vergrößern.

3. Wärmequellensystem (10, 110) nach Anspruch 1 oder 2, wobei die Steuerung (21, 121) konfiguriert ist, den Antrieb des Kompressors (22) zu stoppen, wenn die Verdampfungstemperatur des lastseitigen Wärmetauschers (26) auf eine Stoppschwelle fällt, die auf eine Temperatur eingestellt ist, die niedriger als die Strömungsratenschwelle ist.

4. Wärmequellensystem (10, 110) nach Anspruch 3,
wobei in der Speichereinheit eine Schwellwerttabelle gespeichert ist, in der die Strömungsratenschwelle, das Frequenzerhöhungsausmaß und die Stoppschwelle einander zugeordnet sind, und
wobei die Steuerung (21, 121) konfiguriert ist, auf die Schwellwerttabelle zurückzugreifen, um den Stoppschwellwert zu bestimmen.

5. Wärmequellensystem (10, 110) nach einem der Ansprüche 1 bis 4, umfassend:
eine Vielzahl von Kühlmittelkreisläufen (27); und
eine Vielzahl von Strömungssteuerpumpen (30) des Wärmemediumskreislaufs (40, 140), wobei die Vielzahl von Strömungssteuerpumpen (30) jeweils für einen entsprechenden der Vielzahl von Kühlmittelkreisläufen (27) bereitgestellt sind.

6. Wärmequellensystem (10, 110) nach einem der Ansprüche 1 bis 5, umfassend:
eine Vielzahl von Kühlmittelkreisläufen (27); und
eine Vielzahl der Steuerungen (21, 121), die jeweils für einen entsprechenden der Vielzahl von Kühlmittelkreisläufen (27) bereitgestellt sind.

## Revendications

1. Système de source de chaleur (10, 110), comprenant :
un circuit de frigorigène (27) formé en raccordant un compresseur (22), un échangeur de chaleur côté source de chaleur (24), une vanne de détente (25) et un échangeur de chaleur côté charge (26),
le compresseur (22) étant configuré pour comprimer le frigorigène,
l'échangeur de chaleur côté source de chaleur (24) étant configuré pour échanger de la chaleur entre l'air et le frigorigène,
la vanne de détente (25) étant configurée pour commander un débit d'écoulement du frigorigène,
l'échangeur de chaleur côté charge (26) étant configuré pour échanger de la chaleur entre le milieu chauffant et le frigorigène ;
un circuit de milieu chauffant (40, 140) comprenant une pompe de commande d'écoulement (30) configurée pour pomper le milieu chauffant vers l'échangeur de chaleur côté charge (26), et configuré pour faire circuler le milieu chauffant vers un dispositif de charge (70) qui est prévu en aval de l'échangeur de chaleur côté charge (26) ; et
un dispositif de commande (21, 121) configuré pour commander une fréquence de la pompe de commande d'écoulement (30) et pour exécuter une commande de prévention de gel,
le dispositif de commande (21, 121) comprenant une unité de stockage stockant une table de quantité d'augmentation dans laquelle la fréquence de la pompe de commande d'écoulement (30) et une quantité d'augmentation de fréquence qui est une quantité dont la fréquence de la pompe de commande d'écoulement (30) est augmentée sont associées l'une à l'autre, dans lequel l'unité de stockage stocke également une pluralité de seuils de débit d'écoulement qui sont réglés en association avec la fréquence de la pompe de commande d'écoulement (30) et dans lequel les seuils de débit d'écoulement sont réglés à une température à laquelle le milieu chauffant s'écoulant à travers l'échangeur de chaleur côté charge (26) peut être congelé à moins que le dispositif de commande n'exécute la commande de prévention de gel,
lorsqu'une température d'évaporation de l'échangeur de chaleur côté charge (26) diminue jusqu'au seuil de débit d'écoulement pour la fréquence actuelle de la pompe de commande d'écoulement, le dispositif de commande (21, 121) est configuré pour effectuer la commande de prévention de gel et pour se référer au tableau de quantité d'augmentation avec la fréquence de la pompe de commande d'écoulement (30) pour déterminer la quantité d'augmentation de fréquence, et augmenter la fréquence de la pompe de commande d'écoulement (30) de la quantité d'augmentation de fréquence qui est déterminée.

2. Système de source de chaleur (110) selon la revendication 1,
dans lequel le circuit de milieu chauffant (140) comprend
un tuyau de dérivation (80) configuré pour contourner le dispositif de charge (70), et
une vanne de dérivation (81) prévue sur le tuyau de dérivation (80), et configurée pour commander un débit d'écoulement du milieu chauffant s'écoulant à travers le tuyau de dérivation (80), et
dans lequel lorsque la température d'évaporation de l'échangeur de chaleur côté charge (26) diminue jusqu'au seuil de débit d'écoulement, le dispositif de commande (121) est configuré pour augmenter un degré d'ouverture de la vanne de dérivation (81).

3. Système de source de chaleur (10, 110) selon la revendication 1 ou 2, dans lequel le dispositif de commande (21, 121) est configuré pour arrêter l'entraînement du compresseur (22) lorsque la température d'évaporation de l'échangeur de chaleur côté charge (26) diminue jusqu'à un seuil d'arrêt qui est réglé à une température inférieure au seuil de débit d'écoulement.

4. Système de source de chaleur (10, 110) selon la revendication 3,
dans lequel l'unité de stockage stocke une table de seuil dans laquelle le seuil de débit d'écoulement, la quantité d'augmentation de fréquence et le seuil d'arrêt sont associés les uns aux autres, et
dans lequel le dispositif de commande (21, 121) est configuré pour se référer à la table de seuil pour déterminer le seuil d'arrêt.

5. Système de source de chaleur (10, 110) selon l'une quelconque des revendications 1 à 4, comprenant :
une pluralité des circuits de frigorigène (27) ; et
une pluralité de pompes de commande d'écoulement (30) du circuit de milieu chauffant (40, 140), la pluralité de pompes de commande d'écoulement (30) étant chacune prévue pour un correspondant de la pluralité de circuits de frigorigène (27).

6. Système de source de chaleur (10, 110) selon l'une quelconque des revendications 1 à 5, comprenant :
une pluralité des circuits de frigorigène (27) ; et
une pluralité des dispositifs de commande (21, 121) qui sont chacun prévus pour un correspondant de la pluralité des circuits de frigorigène (27).
